# EUROPÄISCHE PATENTSCHRIFT

(11) **EP 0 457 762 B1**
(45) Veröffentlichungstag und Bekanntmachung des Hinweises auf die Patenterteilung: **07.04.1993**
(21) Anmeldenummer: 89913080.1
(22) Anmeldetag: 19.10.1989
(51) Int. Cl.: G01D 5/14, F15B 15/28

(54) **STELLANTRIEB**
ACTUATING DRIVE
VERIN

(30) Priorität: 15.02.1989 DE 8901770 U
(43) Veröffentlichungstag der Anmeldung: 27.11.1991
(73) Patentinhaber: Schaltbau Gesellschaft mbH, D-81677 München (DE)
(72) Erfinder: HUBER, Erich, D-8000 München 50 (DE)
(74) Vertreter: Grünecker, Kinkeldey, Stockmair & Schwanhäusser Anwaltssozietät
(86) Internationale Anmeldenummer: EP8901249
(87) Internationale Veröffentlichungsnummer: WO9009563

(56) Entgegenhaltungen:
- DE-A- 3 015 258
- US-A- 4 230 023
- US-A- 4 422 041

## Beschreibung

Die Erfindung bezieht sich auf einen Stellantrieb mit einem hinter einer Gehäusewand bewegbaren Stellglied, an dem eine Einrichtung zum Erzeugen eines magnetischen Feldes angebracht ist, und einem vor der Gehäusewand anbringbaren Magnetfeldsensor.

Aus der Praxis sind pneumatische Stellantriebe der eingangs genannten Art, sogenannte Pneumatikzylinder, bekannt. Diese Pneumatikzylinder weisen einen im Innern einer Zylinderwandung hin- und herbeweglichen Kolben auf, der mit einer aus der Stirnseite des Zylinders heraustretenden Kolbenstange verbunden ist. Die Zylinderwandung besteht bei den bekannten Pneumatikzylindern in der Regel aus Nichteisen-Metallen, z. B. Bronze, Aluminium oder dergleichen. An dem Kolben der Pneumatikzylinder ist ein Dauermagnet vorgesehen, dessen Nordpol-Südpol-Achse im wesentlichen senkrecht zur Zylinderwandung zeigt. Die von dem Dauermagneten erzeugten Feldlinien können im wesentlichen ungehindert durch die Zylinderwandung austreten. Auf der Außenseite der Zylinderwand ist eine Hallsonde vorgesehen, die von dem Magnetfeld des Dauermagnten beeinflußt wird, wenn sich der Kolben in einer vorbestimmten Stellung befindet. Auf diese Weise ist es möglich, die Kolbenstellung des Pneumatikzylinders zu erfassen, um somit die Bewegung des Pneumatikzylinders zu steuern bzw. den Pneumatikzylinder bei einer vorbestimmten Kolbenstellung abzuschalten.

Nun werden in der Praxis auch sogenannte hydraulische Hochdruckzylinder verwendet. Ihr Einsatzbereich reicht von Hebebühnen zu Schienenlegefahrzeugen, usw. Häufig ist der Einbauort solcher hydraulischer Hochdruckzylinder sehr beengt. Gleichwohl besteht das Bedürfnis, auch bei hydraulischen Hochdruckzylindern die Kolbenstellung erfassen zu können. Anders als bei dem pneumatischen Stellzylinder besteht die Zylinderwand bei hydraulischen Hochdruckzylindern jedoch zumeist aus Stahl. Stahl ist ein magnetisch leitender Werkstoff und würde daher das Magnetfeld eines am Kolben angeordneten Dauermagneten nach außen abschirmen. Hinzu kommt, daß die Wandstärken der hydraulischen Hochdruckzylinder aufgrund der enormen Arbeitsdrücke verhältnismäßig groß sind, so daß auf der Außenseite der Zylinderwandung kein für eine zuverlässige Steuerung ausreichendes magnetisches Feld mehr zu orten ist. Es hat daher bereits Versuche gegeben, mit anderen weit aufwendigeren Methoden die Kolbenstellung bei Hydraulikhochdruckzylindern zu erkennen. All diesen Methoden ist gemein, daß sie verhältnismäßig teuer sind und daß sie auf der Außenseite der Zylinderwandung einen größeren Bauraum beanspruchen als häufig zur Verfügung steht. Ein ähnlicher Stellantrieb ist auch aus der DE-A-3015 258 bekannt.

Es ist daher Aufgabe der vorliegenden Erfindung, einen Stellantrieb der eingangs genannten Art so zu verbessern, daß auch bei einer magnetisch abschirmenden Gehäusewand die Stellung des Stellgliedes auf einfache Weise und ohne großen baulichen Aufwand erfaßt werden kann.

Diese Aufgabe wird erfindungsgemäß dadurch gelöst, daß die Gehäusewand aus einem magnetisch leitenden Material hergestellt ist, in welchem Feldlinien des magnetischen Feldes in der Gehäusewand einen zur Vorderseite der Gehäusewand abgeschirmten Hauptfluß bilden, und daß zur Erzeugung eines magnetischen Nebenflusses an der Vorderseite der Gehäusewand wenigstens ein, zwei Enden aufweisender magnetischer Leiter angeordnet ist, dessen erstes Ende der Gehäusewand benachbart ist, und dessen zweites Ende einen Luftspalt begrenzt, in den der Magnetfeldsensor angebracht ist.

In einer besonders bevorzugten Ausgestaltung der Erfindung sind zwei magnetische Leiter vorgesehen, deren zweite Enden unter Bildung des Luftspaltes einander gegenüberliegend angeordnet sind.

Diese Lösung ermöglicht auch bei Stellantrieben mit magnetisch abschirmender Gehäusewand auf einfache Weise die Erfassung der Stellung des Stellgliedes. Das hinter der Gehäusewand erzeugte Magnetfeld wird durch das magnetisch abschirmende Material, das stets zugleich auch ein magnetisch leitendes Material ist, abgelenkt, so daß sich in der Gehäusewand zwangsläufig der magnetische Hauptfluß ausbildet, ohne daß die Feldlinien zur Vorderseite der Gehäusewand austreten würden. Dadurch, daß die magnetischen Leiter jeweils mit einem Ende der Gehäusewand benachbart sind, teilt sich der in der Gehäusewand ausgebildete Hauptfluß unter Spaltung eines in die magnetischen Leiter abwandernden Nebenflusses auf, so daß auch in dem Luftspalt zwischen den beiden zweiten Enden der magnetischen Leiter ein Magnetfeld erzeugt wird. Ein in diesem Luftspalt angeordneter Magnetfeldsensor erfaßt die Änderungen des dort erzeugten Magnetfeldes jeweils in Abhängigkeit der Stellung des Stellgliedes. Ein besonderer Vorteil des erfindungsgemäßen Stellantriebes liegt darin, daß der Platzbedarf für die beiden magnetischen Leiter äußerst gering ist, so daß der Einsatzzweck solcher Stellantriebe nahezu unbegrenzt ist.

Die Vorteile der Erfindung kommen in besonderem Maße zum Tragen, wenn der Stellantrieb als hydraulischer Hochdruckzylinder mit einen mit einer Kolbenstange verbundenen Kolben als Stellglied ausgebildet ist, wobei die Zylinderwand die Gehäusewand bildet. Denn gerade bei solchen hydraulischen Hochdruckzylindern ermöglicht die erfindungsgemäße Lösung das ansonsten recht aufwendige Erfassen der Kolbenstellung auf besonders einfache Weise, wobei sich die Erfindung hier gerade zu Nutzen macht, daß die Zylinderwand aus einem magnetisch abschirmenden Material besteht.

Obwohl die Erzeugung des magnetischen Feldes auch durch eine Spule möglich wäre, wird bevorzugt, wenn die Einrichtung zum Erzeugen eines magnetischen Feldes als Magnet, insbesondere Dauermagnet, ausgebildet ist. Die Ausbildung als Dauermagnet hat den Vorteil, daß keine elektrischen Verbindungen ins Innere des Stellantriebes geführt werden müssen.

Die beiden magnetischen Leiter lassen sich besonders flach an der Gehäusewand des Stellantriebes anbringen, wenn sich die zweiten Enden der magnetischen Leiter unter Bildung des Luftspaltes überlappen, so daß die magnetischen Leiter und der Magnetfeldsensor eine Brücke bilden. Diese Brücke kann durch die sich überlappenden Enden der magnetischen Leiter sehr flach sein. Die Höhe der Brücke wird durch die Dicke der magnetischen Leiter und des Magnetfeldsensors, der üblicherweise eine Hallsonde ist, bestimmt.

Um bei voneinander verschiedenen Stellungen des Kolbens bzw. des Stellgliedes einen Schaltvorgang auslösen zu können, ist es vorteilhaft, wenn die Brücke in einem Schutzgehäuse angeordnet ist, welches mit einer Halterung an einer vorbestimten Stelle auf dem Hochdruckzylinder anbringbar ist. Das Schutzgehäuse dient dabei als Schutz der Brücke vor äußeren Einflüssen.

Besonders günstig ist es, wenn die Brücke in ein das Schutzgehäuse bildendes, isolierendes Material eingegossen ist. Die magetischen Leiter brauchen dann nicht auf besondere Weise in dem Schutzgehäuse gehalten werden, sie werden vielmehr durch das isolierende Material selbst umschlossen.

Der durch die magnetischen Leiter abgezweigte Nebenfluß läßt sich auf einfache Weise dadurch verstärken, daß die magnetischen Leiter aus Dynamoblech hergestellt sind. Dieses Dynamoblech weist gegenüber normalem Blech bereits eine erhöhte Permeabilität auf.

In diesem Zusammmenhang wird besonders bevorzugt, wenn die magnetischen Leiter aus Blech mit kornorientierter Vorzugsrichtung hergestellt sind, da dieses Blech sich durch Permeabilität auszeichnet, die noch höher ist als die von Dynamoblechen.

Obwohl ein magnetischer Nebenfluß in den magnetischen Leitern bereits zustandekommen könnte, wenn die ersten Enden in geringem Abstand zur Vorderseite der Gehäusewand liegen, wird der magnetische Nebenfluß wesentlich stärker, wenn die beiden ersten Enden im magnetischen Leiter die Gehäusewand berühren.

Zur Verstärkung des sich in den magnetischen Leitern ausbildenden Nebenflusses trägt in günstiger Weise auch bei, wenn der Abstand zwischen den ersten Enden der beiden Magnetischen Leitern kleiner oder gleich der Länge des magnetischen Hauptflusses in der magnetisch abschirmenden Gehäusewand ist. Die Länge des magnetischen Hauptflusses in der magnetisch abschirmenden Gehäusewand wird im wesentlichen durch die Anordnung der an dem Stellglied vorgesehenen Magnete bestimmt. Diese Länge bleibt daher für den jeweils zu betrachtenden Stellzylinder unabhängig von der Stellung des Stellgliedes gleich. Durch Verschieben des Stellgliedes verlagert sich lediglich der Ort, nicht aber die Länge des in der Gehäusewand ausgebildeten magnetischen Hauptflusses.

Die Brücke mit dem Magnetfeldsensor läßt sich besonders einfach an der Außenseite des Stellantriebes bzw. des Stellzylinders anbringen, wenn die Halterung des Schutzgehäuses aus mindestens einem das Schutzgehäuse und die Zylinderwand umgreifenden Spannband besteht. Wenn das Spannband gelöst wird, kann das die Brücke beinhaltende Schutzgehäuse an eine andere Stelle des Stellantriebes geschoben werden, so daß eine andere Kolbenstellung erfaßt werden kann.

Eine besonders einfache Art der Befestigung des Schutzgehäuses an der Zylinderwand ergibt sich, wenn das Spannband in Form einer Schlauchklemme ausgebildet ist. Solche Schlauchklemmen sich handelsüblich und lassen sich leicht mit einem Schraubendreher lösen und festspannen.

Für die Erzeugung des magnetischen Hauptflusses in der Gehäusewand ist es günstig, wenn der Kolben aus einem magnetisch leitenden Material ausgebildet ist und wenn mindestens ein Dauermagnet an einer der beiden Stirnflächen des Kolbens angeordnet ist. Das hat den Vorteil, daß die Länge des Kolbens die Länge der magnetischen Feldlinien mitbestimmt.

Wenn dabei vorzgsweise die Nordpol-Südpol-Achse des Dauermagneten im wesentlichen parallel zur Gehäusewand angeordnet ist, bedeutet das, daß die Länge des magnetischen Hauptflusses in der Gehäusewand durch die Länge des Dauermagneten und die Länge des Kolbens bestimmt wird. So ist es auf einfache Weise möglich, in der Gehäusewand einen magnetischen Hauptfluß vorzusehen, dessen Länge stets größer ist als der Abstand der beiden ersten Enden der magnetischen Leiter der Brücke.

Im diesem Zusammenhang ist es auch günstig, wenn mindestens ein Dauermagnet auf jeder der beiden Stirnflächen des Kolbens so angeordnet ist, daß sich jeweils zwei Dauermagnete gegenüberliegen, deren Nordpol-Südpol-Achse in die gleiche Richtung zeigt. Hierdurch wird die Länge des sich in der Gehäusewand ausbildenden magnetischen Hauptflusses noch weiter vergrößert.

Eine baulich besonders einfache Anordnung der Dauermagnete ergibt sich, wenn die Nordpol-Südpol-Achsen der Dauermagnete zur Gehäusewand benachbart sind. Es kann dann zwar sein, daß sich nicht über den gesamten Umfang der Zylinderwand ein ausreichender magnetischer Fluß ausbildet, dafür reicht jedoch das Vorsehen eines einzigen, relativ schwachen Dauermagneten.

Gemäß einer anderen Ausführungsform kann an einer Stirnfläche des Kolbens unter Bildung eines Zwischenraumes ein magnetisch leitender, dem Umfang des Kolbens angepaßter Körper befestigt sein, wobei in dem Zwischenraum mindestens ein Dauermagnet angeordnet ist. Auf diese Weise wird in der Gehäusewand ein in Richtung der Zylinderachse gerichteter magnetischer Hauptfluß erzeugt, der symmetrisch zur Zylinderachse verteilt ist. Für die Anordnung der den Magnetfeldsensor enthaltenen Brücke ist daher die Lage bezüglich des Umfanges der Zylinderwand egal.

Anstelle eines einzigen Magneten können auch auf einer Seite des Kolbens mehrere Magnete über den Umfang des Kolbens verteilt angeordnet sein. Auch hierdurch läßt sich ein im wesentlichen symmetrisch zur Zylinderachse ausgebildeter magnetischer Hauptfluß in der Gehäusewand erreichen.

Im folgenden werden Ausführungsbeispiele der Erfindung anhand einer Zeichnung näher erläutert. Es zeigen:
- Fig. 1: eine Seitenansicht durch einen teilweise geschnittenen, schematisch dargestellten Hydraulikhochdruckzylinder mit einer am Außenumfang angeordneten Nebenschlußbrücke,
- Fig.2: den hydraulischen Hochdruckzylinder aus Fig. 1, jedoch mit verschoben angebrachter Nebenschlußbrücke,
- Fig. 3: einen Längsschnitt durch einen Teil eines Hochdruckzylinders gemäß einer ersten Variante und
- Fig. 4: einen Schnitt durch einen Teil eines Hydraulikhochdruckzylinders gemäß einer zweiten Variante.

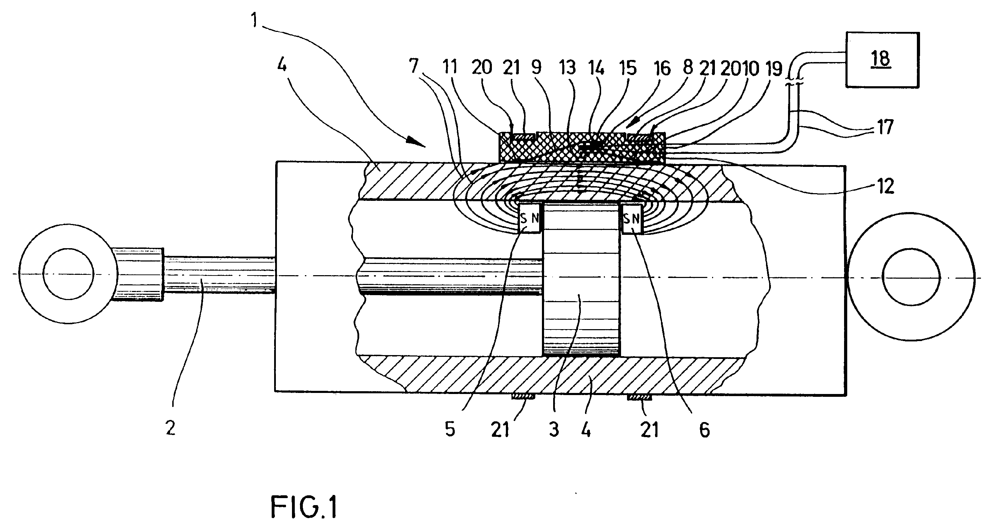

In Fig. 1 ist ein als hydraulischer Hochdruckzylinder 1 ausgebildeter Stellantrieb dargestellt, dessen mit einer Kolbenstange 2 verbundener Kolben 3 als Stellglied im Inneren des Hochdruckzylinders 1 hin- und herbeweglich gelagert ist. Die Hydraulikanschlüsse des Hochdruckzylinders 1 sind der Übersichtlichkeit halber nich dargestellt. Die Gehäusewand 4 des Hochdruckzylinders 1 besteht aus magnetisch leitendem und folglich abschirmendem Stahl mit einer Wandstärke von etwa 10 mm.

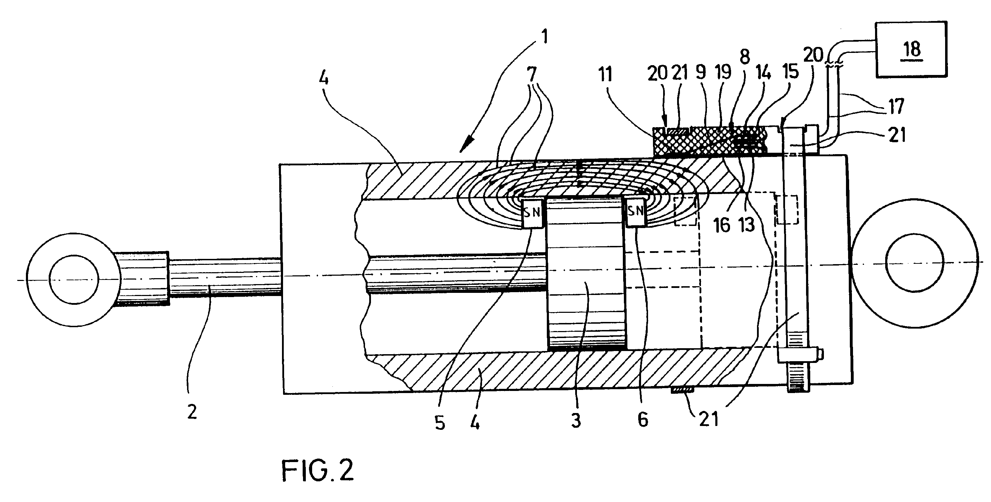

Der Kolben 3 weist zwei gegenüberliegende Stirnflächen auf, auf denen zwei Dauermagnete 5 und 6 einander gegenüberliegende angeordnet sind. Bei diesem, in den Figuren 1 und 2 gezeigten Ausführungsbeispiel, sind die beiden Dauermagnete 5 und 6 der Gehäusewand 4 benachbart angeordnet, wobei die Nordpol-Südpol-Achse beider Dauermagneten 5 und 6 in die gleiche Richtung weist.

Wie aus Fig. 1 ersichtlich ist, bildet sich in dem oberen Teil der Gehäusewand ein magnetischer Hauptfluß aus, wie anhand der Feldlinien 7 erkennbar ist.

Auf der Außenseite der Gehäusewand 4 ist eine magnetische Nebenschlußbrücke 8 angeordnet, die im wesentlichen aus zwei magnetischen Leitern 9 und 10 beseht. Die beiden magnetischen Leiter 9 und 10 sind parallel zur Zylindersachse ausgerichtet und liegen jeweils mit einem ersten Ende 11 bzw. 12 an der Außenseite der Gehäusewand 4 an. Die jeweiligen zweiten Enden 13 und 14 der beiden magnetischen Leiter 9 und 10 sind aufeinander zugerichtet und überlappen einander unter Bildung eines Luftspaltes 15. In dem Luftspalt 15 ist eine Hallsonde 16 angeordnet, die über Leitungen 17 mit einer Auswerteeinheit 18 verbunden ist. Die magnetischen Leiter 9 und 10 sowie die Hallsonde 16 sind gemeinsam in ein Schutzgehäuse 19 aus einem isolierenden Kunststoff eingegossen. Der Abstand der ersten Enden 11 und 12 der beiden magnetischen Leiter 9 und 10 zueinander ist, wie aus Fig. 1 ersichtlich ist, kleiner als die Länge des sich in der Gehäusewand 4 ausbildenden magnetischen Hauptflusses.

Auf der Oberseite des Schutzgehäuses 19 sind Vertiefungen 20 eingearbeitet, in den Spannbänder 21 liegen, die jeweils das Schutzgehäuse 19 und die Gehäusewand 4 des Hochdruckzylinders 1 umgeben. Wie besser aus Fig. 2 ersichtlich ist, handelt es sich bei den Spannbändern 21 um handelsübliche Schlauchklemmen.

Im folgenden wird die Wirkungsweise des in den Figuren 1 und 2 gezeigten Stellantriebes näher erläutert.

Wenn sich der Kolben 3 in einer vorbestimmten Stellung bezüglich der Brücke 8 befindet (vgl. Fig. 1), so daß die magnetischen Leiter 9 und 10 parallel zu den sich in der Gehäusewand 4 ausbildenden Hauptfluß liegen, wird durch die magnetischen Leiter 9, die vorzugsweise aus einem Dynamoblech bzw. einem magnetisch weichen Blech mit kornorientierter Vorzugsrichtung bestehen, ein Teil des magnetischen Flusses abgeleitet, so daß über die Brücke 8 ein magnetischer Nebenfluß abgezweigt wird. Hierdurch wird in dem Luftspalt 15 zwischen den beiden sich überlappenden zweiten Enden 13 und 14 ein magnetisches Feld erzeugt. Die in dem Luftspalt 15 befindliche Hallsonde erfaßt dieses magnetische Feld und gibt ein entsprechendes Signal über die Leitung 17 an die Auswerteeinheit 18.

Wenn der Kolben 3 entlang der Zylinderachse weiterverschoben wird, ändert sich die Stärke des magnetischen Feldes in dem Luftspalt 15, was ebenfalls von der Hallsonde 16 registriert wird. Gleiches passsiert, wenn die in dem Schutzgehäuse 19 befindliche Brücke 8 entlang der Gehäusewand 4 verschoben wird. Dies läßt sich einfach dadurch bewerkstelligen, daß die Spannbänder 21 gelockert werden, wonach das Schutzgehäuse 19 in Richtung der Zylinderachse verschoben werden kann, z. B. in die in Fig. 2 gezeigte Stellung. Wenn der Kolben nicht verschoben wird, befindet sich die Brücke 8 nun in einer Stellung, in der kein nennenswerter magnetischer Nebenfluß abgezweigt werden kann. Eine der in Fig. 1 dargstellt vergleichbare Situation entsteht erst, wenn der Kolben 3 in die strichliert gezeigte Stellung nach rechts verschoben wird.

Anstatt einer Auswerteeinheit 18 kann auch ein Schaltrelais vorgesehen sein, das auf ein Hydraulikventil zur Versorgung des Hydraulikhochdruckzylinders 1 wirkt. Auf diese Weise kann mit Hilfe der Brücke 8 ein Abschalten des hydraulischen Hochdruckzylinders bewirkt werden.

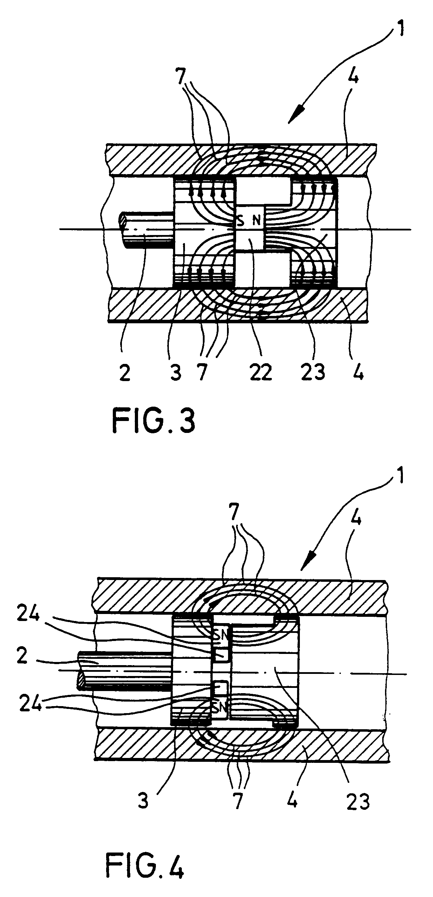

In Fig. 3 ist eine Variante des Hochdruckzylinders aus den Figuren 1 und 2 dargestellt. Der übersichtlichkeit halber ist die Brücke nicht mit dargestellt. Diese Variante unterscheidet sich von dem Hochdruckzylinder aus Fig. 1 lediglich durch die Einrichtung zur Erzeugung eines magnetischen Hauptflusses in der Gehäusewand 4 des Hochdruckzylinders 1. So ist bei der in Fig. 3 beschriebenen Variante ein einziger Dauermagnet 22 nötig auf der der Kolbenstange 2 abgewandten Stirnseite des Kolbens 3. Auf der dem Kolben 3 abgewandten Stirnseite des Dauermagneten 22 ist ein im Querschnitt T-förmiger Rotationskörper 23 aus einem magnetisch leitenden Material befestigt, dessen Grundriß dem Grundriß des Kolbens 3 angepaßt ist. Dieser Rotationskörper 23 bewirkt zusammen mit dem Kolben 3, daß sich die Feldlinien 7 so ausbilden, wie in Fig. 3 gezeigt ist, so daß in der Gehäusewand 4 ein relativ langer magnetischer Hauptfluß erhalten wird.

In Fig. 4 ist eine weitere Variante dargestellt. Diese Variante unterscheidet sich von der Variante gemäß Fig. 3 ledliglich dadurch, daß auf der der Kolbenstange 2 abgewandten Stirnfläche des Kolbens 3 mehrere Dauermagneten 24 gleichmäßig über den Umfang des Kolbens verteilt befestigt sind. Beiden Varianten gemäß Fig. 3 und 4 ist gemein, daß sich der magnetische Hauptfluß in der Gehäusewand 4 symmetrisch zur Zylinderachse ausbildet. Es spielt daher keine Rolle, an welcher Stelle des Umfanges der Gehäusewand 4 des Hochdruckzylinders 1 die Brücke 8 befestigt wird, um den magnetischen Nebenfluß zur Erzeugung eines Abschalt- oder Steuersignales abzuzweigen. Ansonsten enspricht die Funktionsweise der Varianten gemäß Fig. 3 und 4 der Funktionsweise des Hochdruckkolbens 1 gemäß Fig. 1 und 2.

Zwar ist es auch denkbar, die Hallsonde unmittelbar auf der Außenseite der Zylinderwand anzuordnen und nur einen magnetischen Leiter vorzusehen, dessen zweites Ende die Rückseite der Hallsonde abdeckt; dann wird der zu erwartende magnetische Nebenfluß jedoch geringer sein, da aufgrund des Luftspalts zur Zylinderwand der magnetische Widerstand erhöht ist.

## Patentansprüche

1. Stellantrieb mit einem hinter einer Gehäusewand (4) bewegbaren Stellglied (3), an dem eine Einrichtung (5, 6); 22; 24) zum Erzeugen eines magnetischen Feldes angebracht ist, und einem vor der Gehäusewand (4) anbringbaren Magnetfeldsensor (16), **dadurch gekennzeichnet,** daß die Gehäusewand (4) aus einem magnetisch leitenden Material hergestellt ist, in welchem Feldlinien (7) des magnetischen Feldes in der Gehäusewand (4) einen zur Vorderseite der Gehäusewand (4) abgeschirmten Hauptfluß bilden, und daß zur Erzeugung eines magnetischen Nebenflusses an der Vorderseite der Gehäusewand (4) wenigstens ein, zwei Enden (11, 13; 12, 14) aufweisender magnetischer Leiter (9, 10) angeordnet ist, dessen erstes Ende (11, 12) der Gehäusewand (4) benachbart ist, und dessen zweites Ende (13, 14) einen Luftspalt (15) begrenzt, in dem der Magnetfeldsensor (16) angebracht ist.

2. Stellantrieb nach Anspruch 1, **dadurch gekennzeichnet,** daß zwei magnetische Leiter (9, 10) vorgesehen sind, deren zweite Enden (13, 14) unter Bildung des Luftspaltes (15) einander gegenüberliegend angeordnet sind.

3. Stellantrieb nach Anspruch 1 oder 2, **dadurch gekennzeichnet,** daß der Stellantrieb als hydraulischer Hochdruckzylinder (1) mit einem mit einer Kolbenstange (2) verbundenen Kolben (3) als Stellglied ausgebildet ist, wobei die Zylinderwand die Gehäusewand (4) bildet.

4. Stellantrieb nach einem der Ansprüche 1 bis 3, **dadurch gekennzeichnet,** daß die Einrichtung zur Erzeugung eines magnetischen Feldes als Magnet (5, 6; 22; 24) ausgebildet ist.

5. Stellantrieb nach Anspruch 4, **dadurch gekennzeichnet,** daß der Magnet (5, 6; 22; 24) als Dauermagnet ausgebildet ist.

6. Stellantrieb nach einem der Ansprüche 2 bis 5, **dadurch gekennzeichnet,** daß sich die zweiten Enden (13, 14) der magnetischen Leiter (9, 10) unter Bildung des Luftspaltes (15) gegenseitig überlappen, so daß die magnetischen Leiter (9, 10) und der Magnetfeldsensor (16) eine Brücke (8) bilden.

7. Stellantrieb nach Anspruch 6, **dadurch gekennzeichnet,** daß die Brücke (8) in einem Schutzgehäuse (19) angeordnet ist, welches mit einer Halterung an einer vorbestimmten Stelle an der Gehäusewand (4) des Hochdruckzylinders (1) anbringbar ist.

8. Stellantrieb nach Anspruch 6 oder 7, **dadurch gekennzeichnet,** daß die Brücke (8) in ein das Schutzgehäuse (19) bildendes isolierendes Material eingegossen ist.

9. Stellantrieb nacch einem der Ansprüche 1 bis 8, **dadurch gekennzeichnet,** daß der oder die magnetischen Leiter (9, 10) aus Dynamoblech hergestellt sind.

10. Stellantrieb nach einem der Ansprüche 1 bis 9, **dadurch gekennzeichnet,** daß der oder die magnetischen Leiter (9, 10) aus Blech mit kornorientierter Vorzugsrichtung hergestellt sind.

11. Stellantrieb nach einem der Ansprüche 1 bis 10, **dadurch gekennzeichnet,** daß die ersten Enden (11, 12) der magnetischen Leiter (9, 10) die Gehäusewand (4) berühren.

12. Stellantrieb nach einem der Ansprüche 2 bis 11, **dadurch gekennzeichnet,** daß der Abstand zwischen den ersten Enden (11, 12) der beiden magnetischen Leiter (9, 10) kleiner oder gleich der Länge des magnetischen Hauptflusses in der magnetisch abschirmenden Gehäusewand (4) ist.

13. Stellantrieb nach einem der Ansprüche 7 bis 12, **dadurch gekennzeichnet,** daß die Halterung des Schutzgehäuses (19) aus mindestens einem, das Schutzgehäuse (19) und die Gehäusewand (4) umgreifenden Spannband (21) besteht.

14. Stellantrieb nach Anspruch 13, **dadurch gekennzeichnet,** daß das Spannband (21) in Form einer Schlauchklemme ausgebildet ist.

15. Stellantrieb nach einem der Ansprüche 3 bis 14, **dadurch gekennzeichnet,** daß der Kolben (3) aus einem magnetisch leitenden Material ausgebildet ist, und daß mindestens ein Dauermagnet (5, 6; 22; 24) an einer der beiden Stirnflächen des Kolbens (3) angeordnet ist.

16. Stellantrieb nach einem der Ansprüche 5 bis 15, **dadurch gekennzeichnet,** daß die Nordpol-Südpol-Achse des Dauermagneten (5, 6; 22; 24) im wesentlichen parallel zur Gehäusewand (4) angeordnet ist.

17. Stellantrieb nach einem der Ansprüche 3 bis 16, **dadurch gekennzeichnet,** daß mindestens ein Dauermagnet (5, 6) auf jeder der beiden Stirnflächen des Kolbens (3) so angeordnet ist, daß sich jeweils zwei Dauermagnete (5, 6) gegenüberliegen.

18. Stellantrieb nach Anspruch 17, **dadurch gekennzeichnet,** daß die Nordpol-Südpol-Achse der beiden sich gegenüberliegenden Dauermagneten (5, 6) in die gleiche Richtung zeigt.

19. Stellantrieb nach Anspruch 17 oder 18, **dadurch gekennzeichnet,** daß die Nordpol-Südpol-Achsen der Dauermagnete (5, 6) zur Gehäusewand (4) benachbart sind.

20. Stellantrieb nach einem der Ansprüche 3 bis 19, **dadurch gekennzeichnet,** daß an einer Stirnfläche des Kolbens (3) unter Bildung eines Zwischenraumes ein magnetisch leitender, dem Umfang des Kolbens (3) angepaßter Körper (23) befestigt ist, wobei in dem Zwischenraum mindestens ein Dauermagnet (22; 24) angeordnet ist.

21. Stellantrieb nach einem der Ansprüche 3 bis 20, **dadurch gekennzeichnet,** daß auf einer Stirnfläche des Kolbens (3) mehrere Magneten (24) über den Umfang des Kolbens (3) verteilt angeordnet sind.

## Claims

1. Servo-drive having an actuator (3) which can be moved behind a housing wall (4) and on which a device (5, 6; 22; 24) for generating a magnetic field is mounted, and a magnetic field sensor (16) which can be mounted in front of the housing wall (4), characterised in that the housing wall (4) is produced from a magnetically conductive material in which field lines (7) of the magnetic field in the housing wall (4) form a useful flux screened with respect to the front of the housing wall (4), and in that for the purpose of generating a secondary magnetic flux there is mounted on the front of the housing wall (4) at least one magnetic conductor (9, 10) which has two ends (11, 13; 12, 14) and whose first end (11, 12) is adjacent to the housing wall (4) and whose second end (13, 14) bounds an air gap (15) in which the magnetic field sensor (15) is mounted.

2. Servo-drive according to Claim 1, characterised in that two magnetic conductors (9, 10) are provided, whose second ends (13, 14) are arranged, forming the air gap (15), opposite one another.

3. Servo-drive according to Claim 1 or 2, characterised in that the servo-drive is constructed as a hydraulic high-pressure cylinder (1) having as actuator a piston (3) connected to a piston rod (2), the cylinder wall forming the housing wall (4).

4. Servo-drive according to one of Claims 1 to 3, characterised in that the device for generating a magnetic field is constructed as a magnet (5, 6; 22; 24).

5. Servo-drive according to Claim 4, characterised in that the magnet (5, 6; 22; 24) is constructed as a permanent magnet.

6. Servo-drive according to one of Claims 2 to 5, characterised in that the second ends (13, 14) of the magnetic conductor (9, 10) overlap mutually, forming the air gap (15), so that the magnetic conductors (9, 10) and the magnetic field sensor (16) form a bridge (8).

7. Servo-drive according to Claim 6, characterised in that the bridge (8) is arranged in a protective housing (19) which can be mounted by means of a holder on a predetermined point on the housing wall (4) of the high-pressure cylinder (1).

8. Servo-drive according to Claim 6 or 7, characterised in that the bridge (8) is encapsulated in an insulating material forming the protective housing (19).

9. Servo-drive according to one of Claims 1 to 8, characterised in that the magnetic conductor or conductors (9, 10) are produced from magnetic sheet steel.

10. Servo-drive according to one of Claims 1 to 9, characterised in that the magnetic conductor or conductors (9, 10) are produced from sheet steel having a grain-oriented preferred direction.

11. Servo-drive according to one of Claims 1 to 10, characterised in that the first ends (11, 12) of the magnetic conductors (9, 10) touch the housing wall (4).

12. Servo-drive according to one of Claims 2 to 11, characterised in that the distance between the first ends (11, 12) of the two magnetic conductors (9, 10) is smaller than or equal to the length of the magnetic useful flux in the magnetically screened housing wall (4).

13. Servo-drive according to one of Claims 7 to 12, characterised in that the holder of the protective housing (19) consists of at least one clamping band (21) gripping the protective housing (19) and the housing wall (4).

14. Servo-drive according to Claim 13, characterised in that the clamping band (21) is constructed in the form of a hose clamp.

15. Servo-drive according to one of Claims 3 to 14, characterised in that the piston (3) is constructed from a magnetically conductive material, and in that at least one permanent magnet (5, 6; 22; 24) is arranged on one of the two end faces of the piston (3).

16. Servo-drive according to one of Claims 5 to 15, characterised in that the north pole/south pole axis of the permanent magnet (5, 6; 22; 24) is arranged essentially parallel to the housing wall (4).

17. Servo-drive according to one of Claims 3 to 16, characterised in that at least one permanent magnet (5, 6) is arranged on each of the two end faces of the piston (3) in such a way that two permanent magnets (5, 6) are situated opposite one another in each case.

18. Servo-drive according to Claim 17, characterised in that the north pole/south pole axis of the two permanent magnets (5, 6) situated opposite one another points in the same direction.

19. Servo-drive according to Claim 17 or 18, characterised in that the north pole/south pole axes of the permanent magnets (5, 6) are adjacent to the housing wall (4).

20. Servo-drive according to one of Claims 3 to 19, characterised in that a magnetically conductive member (23) adapted to the circumference of the piston (3) is attached, forming an interspace, to an end face of the piston (3), at least one permanent magnet (22; 24) being arranged in the interspace.

21. Servo-drive according to one of Claims 3 to 20, characterised in that a plurality of magnets (24) are arranged on an end face of the piston (3) distributed over the circumference of the piston (3).

## Revendications

1. Vérin comportant un organe de réglage (3) mobile derrière une paroi de carter (4), qui porte une installation (5, 6 ; 22, 24) pour engendrer un champ magnétique ainsi qu'un capteur de champ magnétique (16) susceptible d'être placé devant la paroi (4), caractérisé en ce que la paroi (4) est en une matière magnétique conductrice dans laquelle les lignes (7) du champ magnétique forment, dans la paroi (4), un champ principal protégé vers la face avant de la paroi (4) et en ce que pour générer un flux magnétique auxiliaire, sur la face avant de la paroi (4) il est prévu au moins un conducteur magnétique (9, 10) à deux extrémités (11, 13 ; 12, 14) dont la première extrémité (11, 12) est voisine de la paroi (4) et la seconde extrémité (13, 14) définit un entrefer (15) dans lequel est logé le détecteur de champ magnétique (16).

2. Vérin selon la revendication 1, caractérisé par deux conducteurs magnétiques (9, 10) dont les secondes extrémités (13, 14) sont disposées l'une au-dessus de l'autre en formant un entrefer (15).

3. Vérin selon la revendication 1 ou 2, caractérisé en ce qu'il est constitué par un vérin hydraulique à haute pression (1) avec un piston (3) relié à une tige (2) de piston formant un organe de réglage, la paroi du cylindre étant la paroi (4) du carter.

4. Vérin selon l'une des revendications 1 à 3, caractérisé en ce que l'installation générant un champ magnétique est en forme d'aimant (5, 6 ; 22, 24).

5. Vérin selon la revendication 4, caractérisé en ce que l'aimant (5, 6 ; 22, 24) est en forme d'aimant permanent.

6. Vérin selon l'une des revendications 2 à 5, caractérisé en ce que les secondes extrémités (13, 14) des conducteurs magnétiques (9, 10) se chevauchent en formant l'entrefer (15) et les conducteurs magnétiques (9, 10) et le capteur magnétique (16) forment un pont (8).

7. Vérin selon la revendication 6, caractérisé en ce que le pont (8) est logé dans un boîtier de protection (19) qui se monte, à l'aide d'une fixation, à un endroit prédéterminé sur la paroi (4) du vérin à haute pression (1).

8. Vérin selon la revendication 6 ou 7, caractérisé en ce que le pont (8) est noyé dans le boîtier de protection (19) avec une matière isolante.

9. Vérin selon l'une des revendications 1 à 8, caractérisé en ce que le ou les conducteurs magnétiques (9, 10) sont réalisés en tôle magnétique.

10. Vérin selon l'une des revendications 1 à 9, caractérisé en ce que le ou les conducteurs magnétiques (9, 10) sont réalisés en tôle à grain à orientation préférentielle.

11. Vérin selon l'une des revendications 1 à 10, caractérisé en ce que les premières extrémités (11, 12) du conducteur magnétique (9, 10) touchent la paroi (4).

12. Vérin selon l'une des revendications 2 à 11, caractérisé en ce que la distance entre les premières extrémités (11, 12) des deux conducteurs magnétiques (9, 10) est inférieure ou égale à la longueur du flux magnétique principal dans la paroi (4) formant écran magnétique.

13. Vérin selon l'une des revendications 7 à 12, caractérisé en ce que la fixation du boîtier de protection (19) se compose d'au moins un collier de serrage (21) qui entoure le boîtier de protection (19) et la paroi (4).

14. Vérin selon la revendication 13, caractérisé en ce que le collier (21) est en forme de collier à tube

15. Vérin selon l'une des revendications 3 à 14, caractérisé en ce que le piston (3) est en une matière magnétique conductrice et au moins un aimant permanent (5, 6 ; 22, 24) est prévu sur l'une des deux faces du piston (3).

16. Vérin selon l'une des revendications 5 à 15, caractérisé en ce que l'axe nord-sud de l'aimant permanent (5, 6 ; 22, 24) est essentiellement parallèle à la paroi (4).

17. Vérin selon l'une des revendications 3 à 16, caractérisé par au moins un aimant permanent (5, 6) prévu sur chacune des deux faces du piston (3) pour que chaque fois deux aimants permanents (5, 6) soient en regard l'un de l'autre.

18. Vérin selon la revendication 17, caractérisé en ce que l'axe nord-sud des deux aimants permanents (5, 6) en regard sont dans la même direction.

19. Vérin selon la revendication 17 ou 18, caractérisé en ce que les axes nord-sud des aimants permanents (5, 6) sont voisins de la paroi du carter (4).

20. Vérin selon l'une des revendications 3 à 19, caractérisé en ce qu'un organe magnétique conducteur (23), adapté au contour du piston (3), est fixé sur une face du piston (3) en formant un intervalle recevant au moins un aimant permanent (22, 24).

21. Vérin selon l'une des revendications 3 à 20, caractérisé en ce que sur l'une des faces du piston (3) sont disposés plusieurs aimants (24) répartis à la périphérie du piston (3).
